Europäisches Patentamt

European Patent Office

Office européen des brevets

(11) Publication number: **0 221 476 B1**

# EUROPEAN PATENT SPECIFICATION

(45) Date of publication of patent specification: 20.03.91    (51) Int. Cl.⁵: **H04N 5/21**, H04B 1/10, H04B 7/08

(21) Application number: 86114799.9

(22) Date of filing: 24.10.86

(54) Television interference-compensation apparatus for phase and amplitude compensation.

(30) Priority: 26.10.85 JP 239809/85

(43) Date of publication of application:
13.05.87 Bulletin 87/20

(45) Publication of the grant of the patent:
20.03.91 Bulletin 91/12

(84) Designated Contracting States:
DE FR GB IT NL

(56) References cited:
US-A- 4 373 207
US-A- 4 512 034

PATENT ABSTRACTS OF JAPAN, unexamined applications, section E, vol. 8, no. 103, May 15, 1984; THE PATENT OFFICE JAPANESE GOBERNMENT, page 151 E 244.

(73) Proprietor: KABUSHIKI KAISHA TOSHIBA
72, Horikawa-cho Saiwai-ku
Kawasaki-shi Kanagawa-ken 210(JP)

(72) Inventor: Isobe, Seiji Patent Division
K.K. Toshiba 1-1 Shibuara 1-chome
Minato-ku Tokyo 105(JP)

(74) Representative: Henkel, Feiler, Hänzel & Partner
Möhlstrasse 37
W-8000 München 80(DE)

## Description

The present invention relates to a television interference-compensation apparatus provided at a receiver end of a broadcast transmitter employing two separate sets of receiving antennas.

In general, in addition to television signals transmitted from a desired major TV broading station, unnecessary TV interference signals are mixed in the reception TV signal band of the television (TV) relay broadcasting station. These interference signals may cause the picture disturbance as beat interference and the beat notes, resulting in deterioration of the TV broadcasting. Therefore, the signals need to be removed from the received TV signals.

Various types of interference signal cancelling apparatus are known in the art. For instance, such a cancelling apparatus is disclosed in Japanese Unexamined (KOKAI) Patent Application No. 59-21141 (opened on February 3, 1984).

According to this known interference signal cancelling method, the signal transmitted from the major TV station is received by use of two independent receiving antennas separated by a predetermined distance, for example, one wavelength of the signal coming from the major TV station. A summation signal and a subtraction signal of the respective reception signals are obtained by the two separate antennas. After the amplitude and phase of the subtraction signal are controlled based upon those of the addition signal, the controlled subtraction signal is added to the summation signal so as to remove the interference signals from the desired TV signal.

In the above conventional interference signal cancelling apparatus, the signal from the major TV station is, in principle, received by two separate sets of receiving antennas at the same amplitude and same phase, since two antennas are separated at a distance equal to a single wavelength of the desired TV signal, and are directed to the same antenna direction. However, the antenna directions for the major TV station of two antennas and the lengths of cables, and other antenna reception factors change due to the environmental and mechanical factors such as aging and wear, so that the amplitudes and phases of the major TV station signal components contained in both of the reception signals tend to differ from each other. As a result, the total amount of major TV station signal that undesirably leaks to the subtraction signal increases and the interference signal components are relatively screened in the major TV station signal component and are difficult to be detectable.

The present invention has been developed to solve the foregoing problems and has an object to provide a television interference compensation apparatus in which the amplitudes and phases of the desired TV signals which are derived from two antenna reception stages can be always made coincident, thereby reducing the leakage of the desired TV signal components into the subtraction signal.

The foregoing conventional problems are overcome and the above object of the invention can be achieved by providing a television interference-compensation apparatus comprising:

a first antenna (11) for receiving a desired television signal to derive a first television output signal;

a second antenna (12) positioned apart from the first antenna (11) by a predetermined distance (d) and directed to the same direction as the first antenna (11); for receiving said desired TV signal to derive a second television output signal;

an adder (13) for adding the first TV output signal to the second TV output signal to derive a summation signal ($\Sigma$);

a subtracter (14) for subtracting the first TV output signal from the second TV output signal to derive a subtraction signal ($\Delta$);

an amplitude/phase detecting circuit (30) for detecting at least one of said summation signal ($\Sigma$) and subtraction signal ($\Delta$) to derive at least one of an amplitude compensation signal ($V_G$, $-V_G$) and a phase compensation signal ($Vp$, $-Vp$) characterized by

a gain/phase controlling circuit (20) for controlling at least either amplitudes or phases of said first and second TV output signals, based upon at least one of said amplitude and phase compensation signals ($V_G$, $-V_G$; $Vp$, $-Vp$), so as to establish at least one of amplitude and phase coincidence relationship between the first and second TV output signals.

The invention will be more readily understood on reading the following description with reference to the accompanying drawings, in which:

Fig. 1 is a schematic block diagram of a basic circuit arrangement of a television interference compensation apparatus according to the invention; and

Fig. 2 is a schematic block diagram of a television interference compensation apparatus according to a preferred embodiment of the invention.

Before describing preferred embodiments, basic operation of a television interference-compensation apparatus according to the invention will now be summarized.

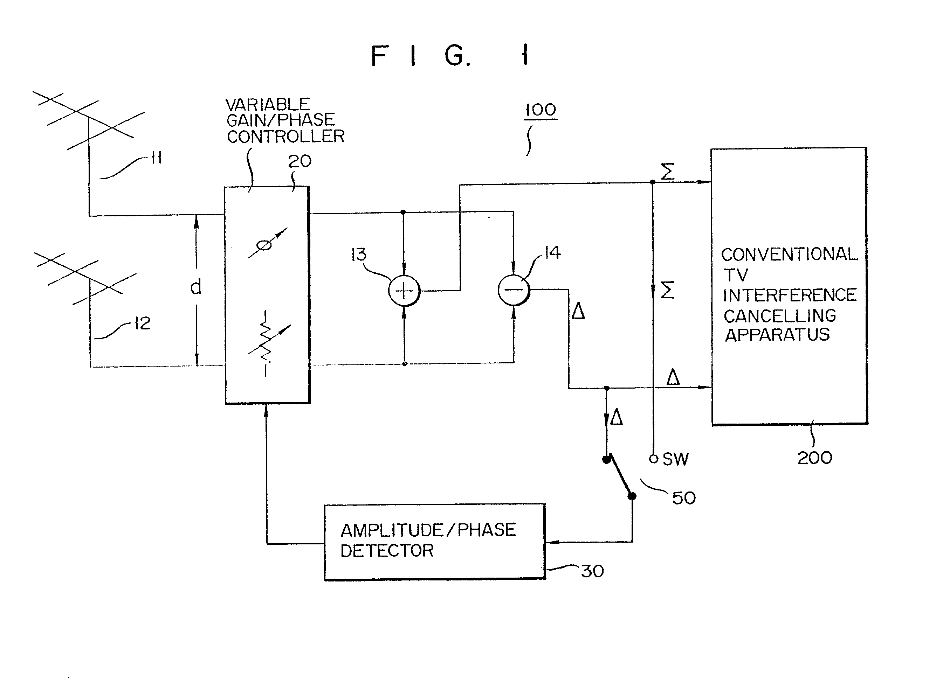

Referring to Fig. 1, a basic arrangement of a television (TV) interference compensation apparatus 100 of the invention will now be described. TV interference compensation apparatus 100 includes: two separate sets of television antennas 11 and 12 separated by a distance "d" substantially equal to a single wavelength "λ" of a desired television signal coming from a major TV broadcasting station (not shown); a variable gain/phase controller 20 for receiving TV output signals from antennas 11 and 12 and performing predetermined signal processes; an adder 13 for adding two TV output signals processed by controller 20; and a subtracter 14 for mutually subtracting those two TV output signals.

Further, compensation apparatus 100 includes an amplitude/phase detector 30. An output of the amplitude/phase detector 30 is connected to the variable gain/phase controller 20. The input of detector 30 is connected to adder 13 and subtracter 14 through a switch 50.

Although not directly concerned with the arrangement of compensation apparatus 100 according to the invention, the summation signal Σ from adder 13 and the subtraction signal Δ from subtracter 14 are supplied to a conventional TV interference-cancelling apparatus 200, thereby cancelling the interference signal contained in the subtraction signal by use of a vector processing method. It should be noted that this interference signal is completely different from the interference signal to be processed by the present invention.

The functions of variable gain/phase controller 20 and amplitude/phase detector 30, that are the feature of the present invention, will now be described in detail.

First, two antennas 11 and 12 are positioned in the direction perpendicular to the major TV station for transmitting a desired TV signal, namely, to the propagating direction of this signal. Antennas 11 and 12, in this case, are separated at a distance "d" corresponding to one wavelength "λ" of the desired TV signal.

Therefore, the TV output signals derived from those antennas would be in phase and have the same amplitudes. However, as previously described, the amplitudes and phases of the TV output signals of TV antennas 11 and 12 are not always coincident with each other due to the aging changes in antennas 11 and 12 and signal cables.

Under these circumstances where the amplitudes and phases are different from each other, these TV output signals are processed by adder 13 and subtracter 14 and summation and subtraction signals Σ and Δ are obtained. These summation and subtraction signals Σ and Δ are selectively supplied to amplitude/phase detector 30 through switch 50. Amplitude/phase detector 30 derives the phase compensation information by processing the summation signal Σ and subtraction signal Δ in a synchronous detecting method and, on the other hand, produces the amplitude compensation information by an amplitude detecting method. Precisely speaking, both the phase compensation information and the amplitude compensation information are obtained by processing the subtraction Σ, whereas the summation signal Σ is used to generate the reference signal required for production of both of the above-described compensation information.

The phase compensation information and amplitude compensation information are then supplied to variable gain/phase controller 20. Controller 20 compensates for the amplitude differences and phase shift of two TV output signals derived from respective TV antennas 11 and 12 so as to be coincident with each other on the basis of the above-defined phase and amplitude compensation information.

As is mentioned above, the amplitudes and phases of two TV output signals derived by receiving the desired TV signal with two TV antennas 11 and 12 can be made coincident with each other. Therefore, there is such an advantage that desired additional signal processing can be normally executed by TV interference-cancelling apparatus 200 coupled to compensation apparatus 100. In other words, even if the aging changes and characteristic changes have occurred in two TV antennas systems and in receiving signal cables, the invention has the feature such that those changes can be compensated for and the reception signals having the correct relationship for their amplitudes and phases can be derived.

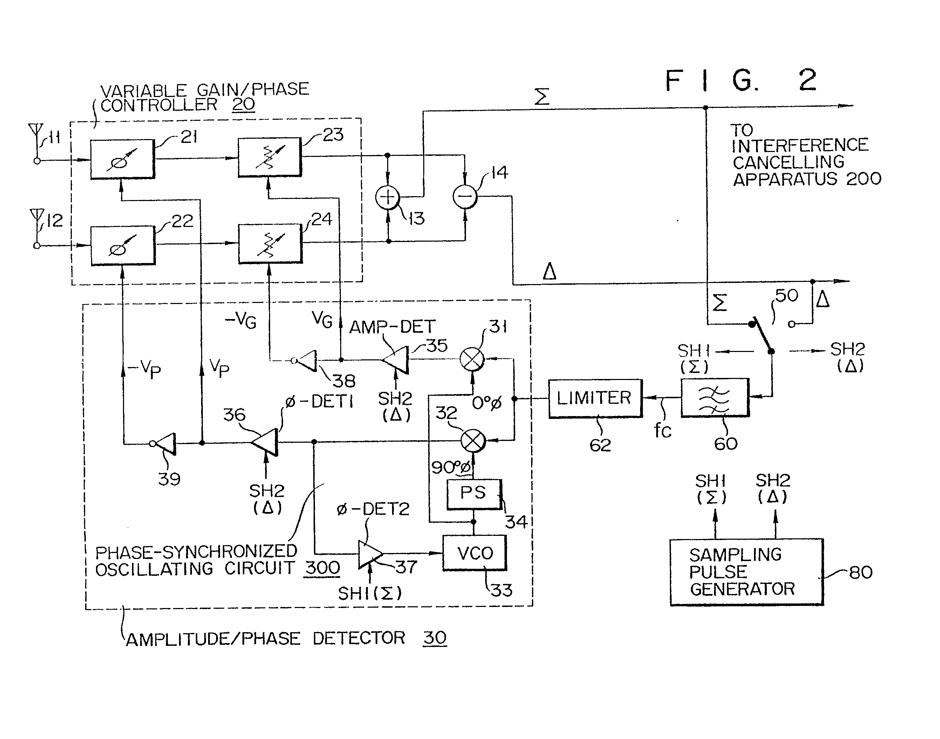

Referring now to Fig. 2, a circuit arrangement of a television interference-compensation apparatus 100 according to a preferred embodiment will be described in detail.

It should be noted that the same reference numerals shown in Fig. 1 will be employed as those for denoting the same, or similar circuit elements in Fig. 2.

The television output signals similarly received by first and second receiving antennas 11 and 12 installed under a predetermined condition are supplied to adder 13 and subtracter 14 through first and second variable phase shifters 21 and 22 and also first and second variable gain amplifiers 23 and 24, respectively. First and second variable phase shifters 21 and 22 and first and second variable gain amplifiers 23 and 24 constitute the foregoing variable gain/phase controller 20. Summation signal Σ and subtraction signal Δ which are derived from adder 13 and subtracter 14 are selectively transmitted to a band pass filter 60 through switch 50. Switch 50 permits summation signal Σ to be derived out when first sample pulse $SH_1$ is received from a sample pulse generator 80. Switch 50 allows subtraction signal Δ to be derived out when a second sample pulse $SH_2$ from generator 80 is received. Band pass filter 60 allows only a picture carrier signal $f_c$ of the desired TV signal transmitted from the major TV station to pass to the amplitude/phase detector 30. After the amplitude of the signal $f_c$ derived from band pass filter 60 is limited by an amplitude limiter 62, this signal $f_c$ is distributed to first and second mixers 31 and 32 of the amplitude/phase detector 30.

First and second mixers 31 and 32 mix the amplitude-limited input signal with an oscillation signal directly derived from a voltage controlled oscillator (VCO) 33 and also with the oscillation signal from VCO 33 the phase of which is shifted $90°$ in a phase shifter 34. An output of first mixer 31 derived by directly mixing the oscillation signal from VCO 33 with the input signal is supplied to an amplitude detector (AMP-DET) 35. An output of second mixer 32 derived by mixing the input signal with the phase-shifted oscillation signal is supplied to first and second phase detectors ($\phi$-DET$_1$ and $\phi$-DET$_2$) 36 and 37. Amplitude detector 35 detects the amplitude of the mixer output signal in response to second sample pulse SH$_2$ so that an amplitude compensation signal $V_G$ is derived from amplitude detector 35. The amplitude compensation signal $V_G$ is supplied to first variable gain amplifier 23 and also supplied through an inverter 38 to second variable gain amplifier 24.

First phase detector 36 detects the phase of the mixer output signal in response to second sample pulse SH$_2$. As a result, phase compensation signal Vp is derived from first phase detector 36, and this compensation signal Vp is transmitted directly to first variable phase shifter 21 and also supplied through an inverter 39 to second variable phase shifter 22. On the other hand, second phase detector 37 detects in a similar manner, the phase of the mixer output signal in response to first sample pulse SH$_1$. The signal derived from second phase detector 37 is supplied to VCO 33 and used to set the oscillating frequency. That is to say, the amplitude-limited signal, i.e., carrier signal $f_c$ of the desired TV signal is reproduced by a loop circuit (phase-synchronized oscillation circuit) 300 constituted by second mixer 32, second phase detector 37, and voltage controlled oscillator (VCO) 33. In other words, the phase-locking operation of the reference signals for first and second mixers 31 and 32 is realized by phase-locked loop circuit 300.

Amplitude/phase detector 30 in Fig. 1 is constituted by those circuit elements from first mixer 31 to inverter 39 described above.

With the foregoing circuit arrangement, the amplitude/phase compensation will now be described hereinbelow.

First, it is assumed that various factors such as deterioration and the like do not occur in the TV signal receiving system and, therefore, the amplitudes and phases of the TV output signals of two antennas respectively are coincident with each other. Summation signal Σ and subtraction signal Δ are sequentially selectively supplied to band pass filter 60 by means of switch 50, which performs the switching operation in synchronization with sample pulses SH$_1$ and SH$_2$, respectively, so that only picture carrier signal $f_c$ of the major TV station signal is extracted from the band pass filter 60. The extracted carrier signal is amplitude-limited by amplitude limiter 62 and thereafter, it is supplied to first and second mixers 31 and 32, respectively.

While first sample pulse SH$_1$ is being produced, switch 50 is connected to receive summation signal Σ from the adder 13 (in the switching state shown in Fig. 2). The phase-synchronized oscillating circuit 300 continuously produces an oscillation signal at frequency $f_c$ which is phase-synchronized with the picture carrier of the major TV station (namely, performs the phase locking operation of the picture carrier).

At the beginning of the next generation period of second sample pulse SH$_2$, switch 50 is changed over to receive the subtraction signal Δ. Thus, subtraction signal Δ is similarly transmitted through switch 50 and becomes the major TV station carrier signal component by means of band pass filter 60. Further, after the amplitude of subtraction signal Δ has been limited to be constant by amplitude limiter 62, this signal is distributed to first and second mixers 31 and 32. In this case, the output (i.e., the reference signal) of VCO 33, whose phase is synchronized with major TV station carrier signal $f_c$, is supplied directly to the mixer 31 and, via the phase shifter 34 to the mixer 32 when first sample pulse SH$_1$ is generated. Therefore, the signals mixed in these mixers 31 and 32 contain the major TV station signal (the desired TV signal) components which would normally leak into the subtraction signal.

The output of first mixer 31 is amplitude-detected by amplitude detector 35. The output of amplitude detector 35 has the positive or negative polarity in accordance with such a fact that one of the received TV output signals from first and second antennas 11 and 12 is greater than the other. This output contains the DC component proportional to the amplitude difference between these TV output signals. Namely, variable gain amplifiers 23 and 24 are differentially controlled by the amplitude-detected signal (i.e., the gain compensation signal), thereby equalizing the amplitudes of both TV output signals. Thus, the leakage of the major TV station signal into the subtraction signal Δ can be reduced.

As will be obviously understood from the circuit arrangement in Fig. 2, so-called "quadrature detection" is performed by first and second mixers 31 and 32, voltage controlled oscillator 33, and $90°$-phase shifter 34. In addition, the amplitude of the major TV station signal component which has leaked into subtraction signal Δ is detected by first mixer 31 and amplitude detector 35, so that the amplitude compensating signal $V_G$; $-V_G$ can be obtained.

Simultaneously, the output of second mixer 32 is phase-detected by first phase detector 36. The output of first phase detector 36 contains another DC component proportional to the sine wave "sinφ" of phase φ of the major TV station signal component included in the subtraction signal Δ. That is, variable phase shifters 21 and 22 are differentially controlled by the phase-detected signal, namely, phase compensating signal $V_p$; $-V_p$, thereby equalizing the phases of both of the desired reception TV signals. Thus, the leakage of part of the major TV station signal into the subtraction signal can be considerably reduced.

Therefore, television interference compensation apparatus 100 constituted as described above can reduce the amount of the major TV station signal component which has leaked into the interference detection signal (subtraction signal) derived by subtracting both of the TV output signals with each other. Consequently, even if the interference signal level considerably lowered, the frequency of the interference signal can be accurately detected.

As described in detail above, according to the invention, it is possible to provide a television interference compensation apparatus wherein the amplitudes and phases of the TV output signals derived from two separate antennas can respectively be always made coincident with each other, thereby enabling the major TV station signal component which has leaked, into the subtraction signal to be reduced.

Furthermore, it is evident to those skilled in the art that other modifications can be easily conceived.

For instance, while generating a reference phase signal by use of second phase detector 37 and VCO 33, in place of inputting summation signal Σ in the generation period of first sample pulse $SH_1$, one of the TV output signals of first and second receiving antennas 11 and 12 may be directly input into the second phase detector 37, whereby a similar effect can be obtained. On the other hand, if the input signal level is sufficiently high, there is no need to differentially control variable gain amplifiers 23 and 24. That is to say, it is sufficient to control only one of them.

In the foregoing embodiment, the compensation was effected for both of the amplitudes and phases of the two TV signals. However, the practical effect may be obtained by compensating for only either one of them.

## Claims

1. A television interference-compensation apparatus comprising:

first antenna means (11) for receiving a desired television (TV) signal to derive a first television (TV) output signal;

second antenna means (12) positioned apart from the first antenna means (11) by a predetermined distance (d) and directed to the same direction as the first antenna means (12), for receiving said desired TV signal to derive a second television (TV) output signal;

adder means (13) for adding the first TV output signal to the second TV output signal to derive a summation signal (Σ);

subtracter means (14) for subtracting the first TV output signal from the second TV output signal to derive a subtraction signal (Δ);

amplitude/phase-detecting means (30) for detecting at least one of said summation signal (Σ) and subtraction signal (Δ) to derive at least one of a amplitude compensation signal ($V_G$, $-V_G$) and a phase compensation signal ($V_p$, $-V_p$) characterized by

gain/phase-controlling means (20) for controlling at least either amplitudes or phases of said first and second TV output signals, based upon at least one of said amplitude and phase compensation signals, so as to establish at least one of amplitude and phase coincidence relationship between the first and second TV output signals.

2. An apparatus (100) as claimed in claim 1, characterized in that said amplitude/phase detecting means (30) includes:

a phase-synchronized oscillating circuit (300) for detecting said summation signal (Σ) to derive a phase signal of the desired TV signal and for oscillating a reference signal in synchronism with the phase signal;

a first mixer (31) for mixing said subtraction signal (Δ) with said reference signal to derive the desired TV signal leaked into said subtraction signal (Δ); and

an amplitude detector (35) for detecting the desired TV signal derived from the first mixer (31) to derive said amplitude compensation signal ($V_G$, $-V_G$).

3. An apparatus (100) as claimed in claim 1, characterized in that said amplitude/phase detecting means (30) includes:

a phase-synchronized oscillating circuit (300) for detecting said summation signal (Σ) to derive a phase signal of the desired TV signal and for oscillating a reference signal in synchronism with the phase signal;

a second mixer (32) for mixing said subtraction signal (Δ) with said reference signal to derive the desired TV signal leaked into said subtraction signal (Δ); and

a phase detector (36) for detecting the desired TV signal derived from the second mixer (32) to derive said phase compensation signal (Vp, -Vp).

4. An apparatus (100) as claimed in claim 2, characterized in that said gain/phase controlling means (20) includes:

a first variable gain amplifier (23) for receiving said amplitude compensation signal (V$_G$) from said amplitude detector (35) to control the gain of said first amplifier (23), thereby varying the amplitude of the first TV output signal; and

a second variable gain amplifier (24) for receiving said amplitude compensation signal (-V$_G$) from said amplitude detector (35) via a first inverter (38) to control the gain of said second amplifier (24), thereby varying the amplitude of the second TV output signal.

5. An apparatus (100) as claimed in claim 3, characterized in that said gain/phase controlling means (20) includes:

a first variable phase shifter (21) for receiving said phase compensation signal (Vp) from said phase detector (36) to phase-shift the first TV output signal; and

a second variable phase shifter (22) for receiving said phase compensation signal (-Vp) from said phase detector (36) via a second inverter (39) to phase-shift the second TV output signal.

6. An apparatus (100) as claimed in claim 1, characterized by further comprising:

a bandpass filter (60) for filtering said subtraction or summation signals (Δ, Σ) supplied from either said subtracter means (14) or said adder means (13) to derive a frequency signal containing a carrier of the desired TV signal; and

an amplitude limiter (62) for limiting the amplitude of the frequency signal derived from the bandpass filter (60).

7. An apparatus (100) as claimed in claim 1, characterized by further comprising:

a sampling pulse generator (80) for generating a first sampling pulse (SH1) and a second sampling pulse (SH2); and

a switching device (50) for selectively conducting one of said subtraction signal (Δ) and summation signal (Σ) to said amplitude/phase detecting means (30) in response to said first and second sampling pulses (SH1, SH2).

8. An apparatus (100) as claimed in claim 2 or 3, characterized in that said first mixer (31), said second mixer (32), and said phase-synchronized oscillating circuit (300) constitute a quadrature detector.

9. An apparatus (100) as claimed in claim 1, characterized in that said predetermined distance (d) is substantially equal to a single wavelength (λ) of said desired TV signal.

## Revendications

1. Appareil de compensation d'interférences de télévision comprenant :

- une première antenne (11) pour recevoir un signal de télévision désiré de façon à extraire un premier signal de sortie de télévision ;

- une seconde antenne (12) disposée loin de la première antenne (11) d'une distance prédéterminée (d) et dirigée dans la même direction que la première antenne (11) ; pour recevoir ledit signal désiré de télévision de façon à extraire un second signal de sortie de télévision ;

- un additionneur (13) pour ajouter le premier signal de sortie TV au second signal de sortie TV pour extraire un signal de sommation (Σ);

- un soustracteur (14) pour soustraire le premier signal de sortie TV du second signal de sortie TV pour extraire un signal de soustraction (Δ) ;

- un circuit (30) de détection amplitude/phase, pour détecter au moins le signal de sommation (Σ) ou le signal de soustraction (Δ) pour extraire au moins un des signaux de compensation de l'amplitude (V$_G$, -V$_G$) et un signal de compensation de phase (Vp -Vp), caractérisé en ce qu'il comporte aussi :

- un circuit (20) de contrôle gain/phase pour contrôler au moins les amplitudes ou les phases desdits premier et second signaux de sortie TV sur la base d'au moins l'un desdits signaux de compensation en amplitude et en phase (V$_G$, -V$_G$) ; (Vp -Vp) de façon à établir au moins une relation de coïncidence sur l'amplitude ou la phase entre le premier et le second signal de sortie TV.

2. Appareil (100) selon la revendication 1, caractérisé en ce que lesdits moyens (30) de détection amplitude/phase comportent :
   - un circuit (300) d'oscillation à synchronisation de phase pour détecter ledit signal de sommation ($\Sigma$) de façon à extraire un signal de phase du signal TV désiré et pour faire osciller un signal de référence en synchronisme avec le signal de phase ;
   - un premier mélangeur (31) pour mélanger ledit signal de soustraction ($\Delta$) avec ledit signal de référence pour extraire le signal TV désiré inséré dans ledit signal de soustraction ($\Delta$); et
   - un détecteur d'amplitude (35) pour détecter le signal TV désiré dérivé du premier mélangeur (31) de façon à extraire ledit signal de compensation d'amplitude ($V_G$ -$V_G$).

3. Appareil selon la revendication 1, caractérisé en ce que lesdits moyens (30) de détection amplitude/phase comportent:
   - un circuit (300) d'oscillation à phase synchronisé pour détecter ledit signal de sommation ($\Sigma$) pour extraire un signal de phase du signal TV désiré et pour produire l'oscillation d'un signal de référence en synchronisme avec le signal de phase ;
   - un second mélangeur (32) pour mélanger ledit signal de soustraction ($\Delta$) avec ledit signal de référence pour extraire le signal TV désiré évanoui dans ledit signal de soustraction ($\Delta$) et
   - un détecteur de phase (36) pour détecter le signal TV désiré dérivé du second mélangeur (32) de façon à extraire ledit signal de compensation de phase (Vp - Vp).

4. Appareil selon la revendication 2, caractérisé en ce que lesdits moyens de commande gain/phase (20) comprenent:
   - un premier amplificateur (23) à gain variable pour recevoir ledit signal de compensation d'amplitude ($V_G$) dudit détecteur d'amplitude (35) pour commander le gain dudit premier amplificateur (23), de façon à faire varier l'amplitude du premier signal de sortie TV ; et
   - un second amplificateur à gain variable (24) pour recevoir ledit signal de compensation d'amplitude (-$V_G$) dudit détecteur d'amplitude (35) via un premier inverseur (38) pour commander le gain dudit second amplificateur (34), de façon à faire varier l'amplitude du second signal de sortie TV.

5. Appareil selon la revendication 3, caractérisé en ce que lesdits moyens de contrôle gain/phase (20) comprenent :
   - un premier déphaseur à phase variable (21) pour recevoir ledit signal de compensation de phase ($V_p$) dudit détecteur de phase (36) pour déphaser le premier signal de sortie TV ; et
   - un second déphaseur à phase variable (22) pour recevoir ledit signal de compensation de phase (-$V_p$) dudit détecteur de phase (36) via un second inverseur (39) pour déphaser le second signal de sortie TV.

6. Appareil selon la revendication 1, caractérisé en ce qu'il comporte de plus :
   - un filtre passe-bande (60) pour filtrer lesdits signaux de soustraction et de sommation ($\Delta$, $\Sigma$) fournis ou bien par lesdits moyens de soustraction (14) ou bien par lesdits moyens d'addition (13) de façon à extraire un signal de fréquence contenant une porteuse d'un signal TV désiré ; et
   - un limiteur d'amplitude (62) pour limiter l'amplitude du signal en fréquence extrait du filtre passe-bande (60).

7. Appareil selon la revendication 1, caractérisé en ce qu'il comporte de plus :
   - un générateur (80) d'impulsions d'échantillonnage pour générer une première impulsion d'échantillonnage (SH1) et une seconde impulsion d'échantillonnage (SH2) ; et
   - un dispositif de commutation (50) pour conduire sélectivement un signal pris parmi le signal de soustraction ($\Delta$) et le signal de sommation ($\Sigma$) vers lesdits moyens de détection amplitude/phase (30) en réponse aux dites première et seconde impulsions d'échantillonnage (SH1, SH2).

8. Appareil selon la revendication 2 ou 3, caractérisé en ce que ledit premier mélangeur (31), ledit second mélangeur (32) et ledit circuit (300) d'oscillation à synchronisation de phase constituent un détecteur en quadrature.

9. Appareil selon la revendication 1, caractérisé en ce que ladite distance prédéterminée (d) est pratiquement égale à une seule longueur d'onde ($\lambda$) dudit signal TV désiré.

**Ansprüche**

1. Fernseh-Interferenz-Kompensationsvorrichtung mit:

einer ersten Antenneneinrichtung (11) zum Empfangen eines gewünschten Fernseh (TV)-Signales zum Ableiten eines ersten Fernseh (TV)-Ausgangssignales;

einer zweiten Antenneneinrichtung (12), die von der ersten Antenneneinrichtung (11) um einen vorbestimmten Abstand (d) entfernt angeordnet und in die gleiche Richtung wie die erste Antenneneinrichtung (12) ausgerichtet ist, zum Empfangen des gewünschten TV-Signales, um ein zweites Fernseh (TV)-Ausgangssignal abzuleiten;

einer Addiereinrichtung (13) zum Addieren des ersten TV-Ausgangssignales zum zweiten TV-Ausgangssignal, um ein Summensignal ($\Sigma$) abzuleiten;

einer Subtrahiereinrichtung (14) zum Subtrahieren des ersten TV-Ausgangssignales vom zweiten TV-Ausgangssignal, um ein Subtraktionssignal ($\Delta$) abzuleiten;

einer Amplituden/Phasen-Detektionseinrichtung (30) zum Detektieren wenigstens eines Signales aus dem Summensignal ($\Sigma$) und dem Subtraktionssignal ($\Delta$), um wenigstens ein Signal aus einem Amplitudenkompensationssignal ($V_G$, $-V_G$) und einem Phasenkompensationssignal ($Vp$, $-Vp$) abzuleiten, gekennzeichnet durch

eine Verstärkung/Phasen-Steuereinrichtung (20) zum Steuern wenigstens entweder Amplituden oder Phasen der ersten und zweiten TV-Ausgangssignale aufgrund wenigstens eines Signales aus den Amplituden-und Phasenkompensationssignalen, um wenigstens eine Beziehung aus der Amplituden- und Phasen-Übereinstimmungsbeziehung zwischen den ersten und zweiten TV-Ausgangssignalen aufzustellen.

2. Vorrichtung (100) nach Anspruch 1, dadurch gekennzeichnet, daß die Amplituden/Phasen-Detektionseinrichtung (30) umfaßt:

einen phasensynchronisierten Oszillationskreis (300) zum Detektieren des Summensignales ($\Sigma$), um ein Phasensignal des gewünschten TV-Signales abzuleiten, und zum Oszillieren eines Bezugssignales synchron mit dem Phasensignal;

einen ersten Mischer (31) zum Mischen des Subtraktionssignales ($\Delta$) mit dem Bezugssignal, um das gewünschte TV-Signal abzuleiten, das in das Subtraktionssignal ($\Delta$) ausgetreten ist; und

einen Amplitudendetektor (35) zum Detektieren des gewünschten TV-Signales, das von dem ersten Mischer (31) abgeleitet ist, um das Amplitudenkompensationssignal ($V_G$, $-V_G$) abzuleiten.

3. Vorrichtung (100) nach Anspruch 1, dadurch gekennzeichnet, daß die Amplituden/Phasen-Detektionseinrichtung (30) umfaßt:

einen phasensynchronisierten Oszillationskreis (300) zum Detektieren des Summensignales ($\Sigma$), um ein Phasensignal des gewünschten TV-Signales abzuleiten, und zum Oszillieren eines Bezugssignales synchron mit dem Phasensignal;

einen zweiten Mischer (32) zum Mischen des Subtraktionssignales ($\Delta$) mit dem Bezugssignal, um das gewünschte TV-Signal abzuleiten, das in das Subtraktionssignal ($\Delta$) ausgetreten ist; und

einen Phasendetektor (36) zum Detektieren des gewünschten TV-Signales, das vom zweiten Mischer (32) abgeleitet ist, um das Phasenkompensationssignal ($Vp$, $-Vp$) abzuleiten.

4. Vorrichtung (100) nach Anspruch 2, dadurch gekennzeichnet, daß die Verstärkung/Phasen-Steuereinrichtung (20) aufweist:

einen ersten Verstärker (23) mit veränderlichem Verstärkungsfaktor zum Empfangen des Amplitudenkompensationssignales ($V_G$) vom Amplitudendetektor (35), um den Verstärkungsfaktor des ersten Verstärkers (23) zu steuern, damit so die Amplitude des ersten TV-Ausgangssignales verändert wird; und

einen zweiten Verstärker (24) mit veränderlichem Verstärkungsfaktor zum Empfangen des Amplitudenkompensationssignales ($-V_G$) vom Amplitudendetektor (35) über einen ersten Inverter (38) zum Steuern des Verstärkungsfaktors des zweiten Verstärkers (24), damit so die Amplitude des zweiten TV-Ausgangssignales verändert wird.

5. Vorrichtung (100) nach Anspruch 3, dadurch gekennzeichnet, daß die Verstärkung/Phasen-Steuereinrichtung (20) aufweist:

einen ersten veränderlichen Phasenschieber (21) zum Empfangen des Phasenkompensationssignales ($Vp$) vom Phasendetektor (36) zum Phasenschieben des ersten TV-Ausgangssignales; und

einen zweiten veränderlichen Phasenschieber (22) zum Empfangen des Phasenkompensationssignales ($-Vp$) vom Phasendetektor (36) über einen zweiten Inverter (39) zum Phasenschieben des zweiten TV-Ausgangssignales.

6. Vorrichtung (100) nach Anspruch 1, gekennzeichnet durch:

ein Bandpaßfilter (60) zum Filtern der Subtraktions-oder Summensignale ($\Delta$ , $\Sigma$), die von entweder der Subtrahiereinrichtung (14) oder der Addiereinrichtung (13) eingespeist sind, um ein Frequenzsignal abzuleiten, das einen Träger des gewünschten TV-Signales enthält; und

einen Amplitudenbegrenzer (62) zum Begrenzen der Amplitude des von dem Bandpaßfilter (60) abgeleiteten Frequenzsignales.

7. Vorrichtung (100) nach Anspruch 1, gekennzeichnet durch:

einen Abtastimpulsgenerator (80) zum Erzeugen eines ersten Abtastimpulses (SH1) und eines zweiten Abtastimpulses (SH2); und

eine Schalteinrichtung (50) zum wahlweisen Leiten eines Signales aus dem Subtraktionssignal ($\Delta$) und dem Summensignal ($\Sigma$) zu der Amplituden,Phasen-Detektoreinrichtung (30) abhängig von den ersten und zweiten Abtastimpulsen (SH1, SH2).

8. Vorrichtung (100) nach Anspruch 2 oder 3, dadurch gekennzeichnet, daß der erste Mischer (31), der zweite Mischer (32) und der phasensynchronisierte Oszillationskreis (300) einen Quadratur- bzw. Phasenschieberdetektor bilden.

9. Vorrichtung (100) nach Anspruch 1, dadurch gekennzeichnet, daß der vorbestimmte Abstand (d) im wesentlichen gleich einer einzigen Wellenlänge ($\lambda$) des gewünschten TV-Signales ist.

F I G. 1

VARIABLE
GAIN/PHASE
CONTROLLER

100

11

20

d

12

13

14

Δ

Σ

Σ

Δ

Δ

SW

50

AMPLITUDE/PHASE
DETECTOR

30

CONVENTIONAL
TV
INTERFERENCE
CANCELLING
APPARATUS

200

EP 0 221 476 B1

F I G. 2

SAMPLING PULSE GENERATOR